**Europäisches Patentamt**

**European Patent Office**

**Office européen des brevets**

(11) Veröffentlichungsnummer: **0 279 468**
**A2**

# (12) EUROPÄISCHE PATENTANMELDUNG

(21) Anmeldenummer: 88102499.6

(22) Anmeldetag: 20.02.88

(51) Int. Cl.⁴ **B05B 15/10**

(30) Priorität: 20.02.87 DE 3705518

(43) Veröffentlichungstag der Anmeldung:
24.08.88 Patentblatt 88/34

(84) Benannte Vertragsstaaten:
AT BE CH ES FR GB GR IT LI NL SE

(71) Anmelder: Druckgusswerk Mössner GmbH
Unterbiberger Strasse 37
D-8000 München 83(DE)

(72) Erfinder: Prexl, Detlev
Weidenerstrasse 72
D-8000 München 83(DE)

(74) Vertreter: Splanemann, Rainer et al
Patentanwälte Dipl.-Ing. R. Splanemann Dr.
B. Reitzner Dipl.-Ing. K. Baronetzky Tal 13
D-8000 München 2(DE)

(54) Vorrichtung zum Sprühen von Strömungsmitteln.

(57) Die Vorrichtung zum Sprühen von Strömungsmitteln weist einen an einem Rahmen geführten, ausfahrbaren Sprühkopf (20) auf, der an dem freien Ende eines Teleskops (10, 12) od. dgl. angeordnet ist, das an dem Rahmen (28) angeordnet ist. Durch das Teleskop (10, 12) ist unter Überdruck stehendes Strömungsmittel zuführbar und am freien, den Sprühkopf (20) tragenden Ende des Teleskops eine steuerbare Rückstellkraft wirksam.

FIG. I

## Vorrichtung zum Sprühen von Strömungsmitteln

Die Erfindung betrifft eine Vorrichtung zum Sprühen von Strömungsmitteln gemäß dem Oberbegriff von Anspruch 1.

Derartige bekannte Vorrichtungen werden beispielsweise zum Reinigen von Druckgießmaschinen sowie zur Schmierstoffversorgung dieser Maschinen eingesetzt. Angesichts der bestehenden Arbeitsumgebung von Druckgießmaschinen, die Drücke bis zu 2000 mp aufbringen können, sind stabile Konstruktionen erforderlich. Diese Arbeitsumgebungen haben dazu geführt, daß, obwohl Bewegungen des Sprühkopfes in allen Freiheitsgraden wünschenswert wären, bei den bekannten Vorrichtungen der Sprühkopf an einem Rahmen geführt ist, der eine Bewegung des Sprühkopfes nur in vertikaler Richtung, geführt an einer stabilen Schiene, erlaubt. Derartige Vorrichtungen haben deshalb eine entsprechend große Bauhöhe und erfordern hohe Werkshallen mit entsprechend hoch angeordneten Kranbrücken. Daher ist bereits versucht worden, die sich vertikal erstreckenden Rahmen schwenkbeweglich zu lagern, so daß der Rahmen in der Ruhestellung waagerecht angeordnet sein kann. Bei einer derartigen Vorrichtung sind jedoch die Bauhöhe in der Arbeitsstellung nach wie vor groß und der konstruktive Aufwand erheblich.

Ein weiteres Problem besteht in der Zuführung von Strömungsmittel zu dem Sprühkopf. Aufgrund der translatorischen Beweglichkeit des Sprühkopfes können keine Rohre, sondern nur Schläuche verwendet werden, die angesichts der rauhen Arbeitsumgebung mit einer beweglichen, formstabilen Ummantelung abgedeckt sind.

Demgegenüber ist es Aufgabe der vorliegenden Erfindung, eine Vorrichtung gemäß dem Oberbegriff von Anspruch 1 zu schaffen, bei welcher der mechanische und steuerungstechnische Aufwand zur Bewegung des Sprühkopfes reduziert ist, ohne daß dadurch die Bewegungsmöglichkeiten des Sprühkopfes gegenüber dem Rahmen bzw. des Maschinengestells reduziert werden, wobei dennoch die Stabilität des Aufbaues gewahrt bleibt.

Diese Aufgabe wird erfindungsgemäß durch Anspruch 1 gelöst. Vorteilhafte Weiterbildungen ergeben sich aus den Unteransprüchen.

Durch die Maßnahme, daß ein Teleskop od. dgl. vorgesehen ist, kann zunächst die Bauhöhe erheblich vermindert werden. Das ermöglicht die Unterbringung von Druckgußmaschinen in Hallen mit geringer Höhe sowie die Anbringung von Absaugvorrichtungen ober der Maschinen.

Durch Zuführung des unter Überdruck stehenden Strömungsmittels bzw. zumindest des unter Überdruck stehenden Teils des Strömungsmittels durch das Teleskop wird einerseits eine Stabilisierung des Teleskops in der Arbeitsposition erreicht, andererseits bleibt der mechanische Aufwand gering, da für die Zuführung des unter Überdruck stehenden Strömungsmittels keine separaten Schläuche, Rohre od. dgl. erforderlich sind.

Die Ausfahrlänge des Teleskops kann durch die steuerbare Rückstellkraft, die auf den Sprühkopf wirkt, eingestellt werden. Hierdurch ist eine in allen Betriebsstellungen ausreichende mechanische Stabilisierung gegeben.

Gemäß einer vorteilhaften Weiterbildung ist vorgesehen, daß in der Zuleitung des Strömungsmittels zu dem Teleskop ein Zerstäuber für Sprühmittel vorgesehen ist. Hierdurch ist es möglich, die mechanisch empfindliche Zerstäuberdüse für das Sprühmittel in einen geschützten Bereich zu verlagern. Überraschenderweise tritt keine Entmischung des Sprühnebels innerhalb des Teleskops auf.

Wahlweise ist es jedoch auch möglich, das Sprühmittel, beispielsweise über Schläuche, dem Sprühkopf direkt zuzuführen. Dann kann beispielsweise mit einem Druckluftkreis ein Blaskreis und in Abhängigkeit von der Anzahl der Sprühmittelzuleitungen auch eine entsprechende Anzahl von Sprühkreisen bereitgestellt werden, wobei unterschiedliche Sprühmittel zum Einsatz kommen können. Vorteilhafterweise können auch mindestens zwei Teleskope vorgesehen sein, die sich zueinander im wesentlichen parallel erstrecken und die die Anzahl der möglichen Sprüh-bzw. Blaskreise entsprechend vervielfachen.

Die Rückstellkraft kann durch ein mechanisches Zugorgan aufgebracht werden, wobei sich ein Kettentrieb besonders eignet. Bei Verwendung eines Teleskops kann eine ausreichende mechanische Stabilisierung durch symmetrische, seitliche Anordnung von zwei Kettentrieben gewährleistet werden. Bei Verwendung von zwei Teleskopen kann die Rückstellkraft durch einen mittig angeordneten Kettentrieb bereitgestellt werden.

Gemäß einer weiteren vorteilhaften Ausgestaltung der Teleskope sind besondere Dichtungen an den einzelnen Teleskopabschnitten vorgesehen, obwohl dies bei entsprechender Auslegung nicht unbedingt erforderlich ist. Die Dichtungen können zugleich als Anschläge wirken, die die Ausfahrbewegung der einzelnen Teleskopabschnitte begrenzen.

Zweckmäßigerweise sind die Dichtungen nach außen gewandt, so daß die Dichtflächen je von der Innenflächen der einzelnen Teleskopabschnitte gebildet werden. Hierdurch werden Schäden an den Dichtungen durch etwaige Verschmutzung der Außenseiten der Teleskopabschnitte verhindert. Die Dichtungen weisen dann an den oberen Enden jedes Teleskopabschnittes nach außen.

Gemäß einer weiteren vorteilhaften Ausgestaltung der Erfindung weisen die Teleskopabschnitte Ringkolbenabschnitte auf, die dazu dienen, das Ausfahren des Sprühkopfes zu erleichtern bzw. zu bewirken. Durch das unter Druck stehende Strömungsmittel wird ein beträchtlicher Druck auf die Ringkolbenabschnitte ausgeübt, so daß sich die Ausfahrbewegung des Teleskops und auch die Stabilisierung der Stellung des Sprühkopfes entweder durch Schwerkraft oder durch die Kolbenkraft der Ringkolbenabschnitte oder durch Kombinationen dieser Kräfte erreichen läßt.

Vorteilhafterweise ist vorgesehen, daß das Ausfahren des Sprühkopfes lediglich durch den Druck des Strömungsmittels - auch unter Überwindung der Schwerkraft - erfolgen kann. Hierzu ist in dem Sprühkopf ein Druckbegrenzerventil angeordnet, das bis zu einem vorgegebenen Grenzdruck geschlossen bleibt und sich oberhalb dieses Grenzdrucks öffnet. Zum Ausfahren des Sprühkopfes wird dann ein Druck in das Teleskop eingeleitet, der unterhalb des Grenzdrucks liegt, wodurch das Teleskop ausfährt. Zum Betrieb der Vorrichtung wird der Druck soweit erhöht, daß das Druckbegrenzerventil anspricht und das Strömungsmittel freigibt. Bei dieser Ausführungsform ist es auch möglich, von Anfang an Strömungsmittel unter dem vollen Arbeitsdruck in das Teleskop einzuleiten. Solange sich das Teleskop ausdehen kann, ist der Druck so gering, daß das Druckbegrenzerventil nicht anspricht. Erst wenn die durch das mechanische Zugorgan vorgegebene Arbeitsstellung des Sprühkopfes erreicht ist oder alle Teleskopabschnitte an ihren Anschlägen anliegen, steigt der Druck soweit an, daß das Druckbegrenzerventil öffnet und die Austrittsöffnungen des Sprühkopfes beaufschlagt werden. Wahlweise kann hierbei auch die steuerbare Rückstellkraft durch den Ansprechpunkt des Überdruckventils bereitgestellt werden.

Als Sprühmittel kommen unterschiedlichste Flüssigkeiten, wie beispielsweise Gleitmittel, Entfettungsmittel und Reinigungsmittel oder Wasser in Betracht.

Gemäß einer weiteren vorteilhaften Ausgestaltung sind an dem Sprühkopf in ihrer Richtung verstellbare - an sich bekannte - düsenförmige Austrittsöffnungen vorgesehen.

Weitere Einzelheiten, Merkmale und Vorteile der Erfindung sind in der nachfolgenden Beschreibung zweier Ausführungsbeispiele näher erläutert. Es zeigen:

Fig. 1 eine erste Ausführungsform einer erfindungsgemäßen Vorrichtung in perspektivischer, - schematischer Ansicht mit explosionsartig auseinandergezogenen Teilen und

Fig. 2 eine weitere Ausführungsform in gleicher Ansicht.

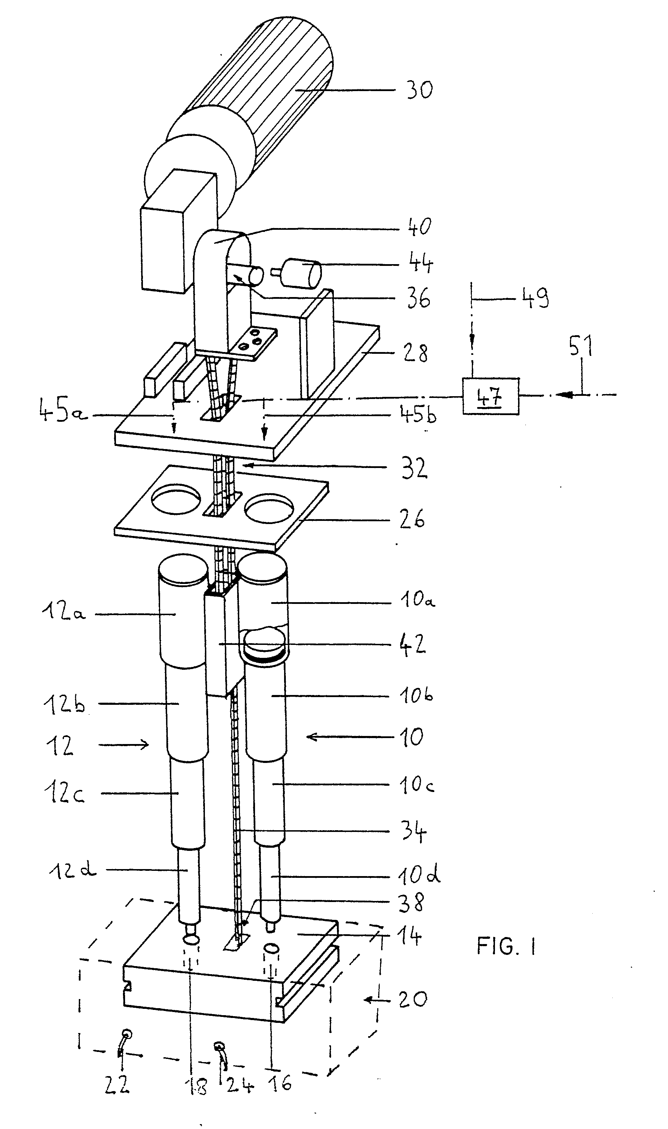

Bei der Ausführungsform gemäß Fig. 1 sind zwei Teleskope 10, 12 vorgesehen, die je vier Teleskopabschnitte 10a, 10b, 10c und 10d bzw. 12a, 12b, 12c und 12d aufweisen. Die Teleskopabschnitte sind in an sich bekannter Weise ineinander einführbar, so daß die Gesamthöhe des Teleskops in eingefahrenem Zustand etwa ein Viertel derjenigen im ausgefahrenen Zustand beträgt. Wenn ein Teleskopabschnitt beispielsweise etwa 60 cm lang ist, beträgt die Ausfahrlänge, d.h. die Länge des Teleskops im ausgefahrenen Zustand, nahezu zwei Meter. An den untersten Teleskopabschnitten 10d und 12d ist eine Sprühkopfhalterung 14 befestigt, wobei in der Sprühkopfhalterung jeweils unterhalb der angeflanschten Teleskopabschnitte 10d und 12d Kanäle 16 und 18 für das Strömungsmittel vorgesehen sind. Durch die Kanäle 16 und 18 kann das Strömungsmittel, je aus den Teleskopen 10 und 12 kommend, die Sprühkopfhalterung durchtreten und in einen schematisch angedeuteten Sprühkopf 20 gelangen, aus welchem es durch eine Vielzahl von düsenartigen Öffnungen, von denen zwei Öffnungen 22 und 24 schematisch angedeutet sind, austreten kann. Der Sprühkopf 20 ist abnehmbar und austauschbar an der Sprühkopfhalterung 14 befestigt.

Die obersten Teleskopabschnitte 10a und 12a sind an ihren oberen Enden in einer Teleskophalterung 26 gelagert, die ihrerseits mit dem Rahmen 28 fest verbunden ist. Der Rahmen 28 ist in Fig. 1 nur schematisch angedeutet. Insbesondere ist die an dem Rahmen abgestützte, die ganze Vorrichtung umgebende Verkleidung nicht dargestellt. Der Rahmen 28 ist mittels nicht dargestellter Bauteile an bzw. auf einer Druckgießmaschine od. dgl. befestigt.

An dem Rahmen ist ferner ein Motor 30 abgestützt, der selbstbremsend - beispielsweise über ein Schneckengetriebe - auf einen Kettentrieb 32 wirkt. Der Kettentrieb 32 weist eine Kette 34 auf, die über ein mit dem Motor 30 verbundenes Kettenrad 36 geführt ist. Ferner ist die Kette 34 mittels einer Kettenhalterung 38 an Sprühkopfhalterung 14 befestigt. Über die Kette 34, das Kettenrad 36 und die Kettenhalterung 38 wird die Rückstellkraft auf den Sprühkopf 20 bzw. für die Teleskope 10, 12 aufgebracht, die vorteilhafterweise stärker ist als die durch die Schwerkraft und/oder die Teleskope aufgebrachte Kraft. Bei Verwendung von Strömungsmittel unter einem Druck von etwa 6 at ist so beispielsweise ein Kettentrieb mit einer Zugkraft von mp-Bereich geboten.

Ferner ist eine Kettensicherung 40 vorgesehen, die die auf dem Kettenrad 36 laufende Kette 34 so umgibt, daß ein Abspringen unmöglich ist. Die lose Part des Kettentrums ist in einem Kettenkasten 42 gefangen.

Die Steuerung der Rückstellkraft erfolgt mittels eines Drehgebers 44, der drehfest mit dem Kettenrad 36 verbunden ist. Über eine geeignete Steuerelektronik wird der Weg, den der Sprühkopf 20 zurücklegt, mittels des Drehgebers erfaßt und mit einem Sollwert verglichen. Der Motor 30 dient als Stellglied für die Anpassung des Istwertes an den Sollwert.

In der in Fig. 1 dargestellten Ausführungsform wird das Strömungsmittel in bereits gemischter Form durch schematisch angedeutete Öffnungen 45a und 45b oberhalb der Teleskope 10, 12 in diese eingeleitet und gelangt über die Kanäle 16, 18 und den Sprühkopf 20 zu den düsenartigen Öffnungen 22, 24. Hierzu sind die Öffnungen 45a und 45b mit einem Zerstäuber 47 verbunden. In dem Zerstäuber 47 wird aus einer Leitung 49 kommendes Sprühmittel mit Hilfe von Luft, die aus einer Leitung 51 kommt, zerstäubt.

Da der Austrittsdurchmesser der düsenartigen Öffnungen 22, 24 geringer als der Strömungsdurchmesser der Teleskope 10, 12 ist, baut sich in den Teleskopen 10, 12 ein - in dieser Ausführungsform geringer - Druck auf, der auf die Teleskopanordnung stabilisierend wirkt. In dieser Ausführungsform werden die Teleskope 10, 12 durch ihr Eigengewicht, das Gewicht der Sprühkopfhalterung 14 sowie des Sprühkopfes 20 abgesenkt, wobei die Absenkbewegung von dem Motor 30 über den Kettentrieb 32 gesteuert wird. Gleichermaßen werden die Teleskope eingefahren, indem der Motor 30 betätigt wird.

In der in Fig. 1 dargestellten Ausführungsform sind zwei Sprühkreise vorgesehen. Jedes Teleskop kann wahlweise mit einem Sprühmittel beaufschlagt werden, wobei mittels des Sprühkopfes 20 eine Anpassung an die gewünschten Sprühgegebenheiten in der Druckgußform erfolgen kann.

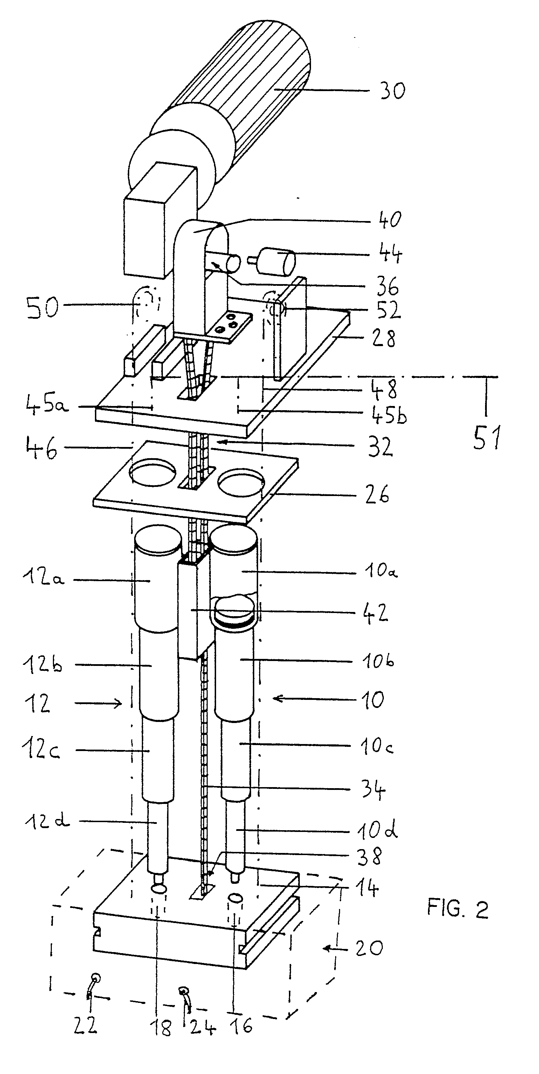

Bei der Darstellung gemäß Fig. 2 sind für gleiche Teile gleiche Bezugszeichen verwendet wie in Fig. 1. Diese Ausführungsform unterscheidet sich von derjenigen gemäß Fig. 1 dadurch, daß das Sprühmittel nicht vorzerstäubt und vorgemischt den Teleskopen 10, 12 zugeführt wird, sondern vielmehr separat in den Sprühkopf 20 eingeleitet wird. Das Strömungsmittel wird jedoch nach wie vor - in Form von Druckluft - durch die Teleskope 10, 12 in die Sprühkopfhalterung 14 und den Sprühkopf 20 eingeleitet und dort zur Zerstäubung des Sprühmittels verwendet.

Die Zuführung des Sprühmittels erfolgt über Schläuche 46, 48, für die Schlauchwickelvorrichtungen 50, 52 vorgesehen sind, die - über Rutschkupplungen - ebenfalls von dem Motor 30 betätigt werden können oder mit Rückstellfedern versehen sind.

In Abwandlung der dargestellten Ausführungsform ist es möglich, mit lediglich einem Teleskop auszukommen und beidseitig des Teleskops Kettentriebe vorzusehen. Bei einer Fig. 2 entsprechenden Ausführungsform können eine Vielzahl von Sprühmittelleitungen vorgesehen sein, die je separat über Schläuche Sprühmittel in den Sprühkopf einbringen, so daß eine Vielzahl von Sprühkreisen gebildet werden kann.

An dem freiliegenden Bereich des Teleskops und/oder der Schläuche 46, 48 kann ein - schützender Faltenbalg vorgesehen sein.

Ferner ist es möglich, die Anzahl der Teleskope und der Teleskopabschnitte den Erfordernissen anzupassen.

Es ist ferner auch möglich, den Kettentrieb durch einen Bandtrieb mit einem aufwickelbaren Stahl-oder Kunststoffband zu ersetzen, das flach, gezahnt oder gelocht sein kann.

Die erfindungsgemäße Vorrichtung ist nicht darauf beschränkt, daß die Sprühkopfhalterung und der Sprühkopf bei der Ausfahrbewegung des Teleskops senkrecht bewegt werden. Vielmehr ist es auch möglich, insbesondere unter Anwendung von unter Druck stehendem Strömungsmittel zur Bereitstellung der Ausfahrkraft für das Teleskop, einen waagerechten oder nahezu waagerechten Betrieb vorzusehen. Ferner kann auch eine Drehung um 180° vorgenommen werden, so daß der Sprühkopf durch das unter Druck stehende Strömungsmittel nach oben ausgefahren wird. In diesem Fall ist in dem Sprühkopf ein Druckbegrenzerventil vorgesehen, das lediglich dann öffnet, wenn der Druck des Strömungsmittels einen vorgegebenen Wert übersteigt.

## Ansprüche

1. Vorrichtung zum Sprühen von Strömungsmitteln mit einem an einem Rahmen geführten, ausfahrbaren Sprühkopf, dadurch **gekennzeichnet,** daß der Sprühkopf (20) an dem freien Ende eines Teleskops (10, 12) od. dgl. angeordnet ist, das an dem Rahmen (28) angeordnet ist, daß durch das Teleskop (10, 12) unter Überdruck stehendes Strömungsmittel zuführbar ist und daß am freien, den Sprühkopf (20) tragenden Ende des Teleskops (10, 12) eine steuerbare Rückstellkraft wirksam ist.

2. Vorrichtung nach Anspruch 1, dadurch gekennzeichnet, daß in der Zuleitung des Strömungsmittels zu dem Teleskop (10, 12) ein Zerstäuber (47) für Sprühmittel vorgesehen ist.

3. Vorrichtung nach Anspruch 1, dadurch gekennzeichnet, daß Sprümittel dem Sprühkopf (20) direkt zugeführt wird.

4. Vorrichtung nach mindestens einem der Ansprüche 1 bis 3, dadurch gekennzeichnet, daß der Sprühkopf (20) mittels mehrerer Teleskope (10, 12) an dem Rahmen (28) angeordnet ist, wobei die Anzahl der Teleskope (10, 12) in Abhängigkeit von der Auswahl unterschiedlicher Sprühmittel und/oder unterschiedlich steuerbarer Kreisläufe gewählt sein kann.

5. Vorrichtung nach mindestens einem der Ansprüche 1 bis 4, dadurch gekennzeichnet, daß vor dem Sprühkopf (20) ein Absperrventil angeordnet ist.

6. Vorrichtung nach mindestens einem der Ansprüche 1 bis 5, dadurch gekennzeichnet, daß zur Aufbringung der Rückstellkraft ein mechanisches Zugorgan vorgesehen ist.

7. Vorrichtung nach Anspruch 6, dadurch gekennzeichnet, daß als mechanisches Zugorgan ein Kettentrieb (32) vorgesehen ist.

8. Vorrichtung nach einem der vorhergehenden Ansprüche, dadurch gekennzeichnet, daß an den Enden der das Teleskop (10, 12) bildenden Teleskopabschnitte (10a bis 10d) Dichtungen vorgesehen sind, die gegenüber den Gleitflächen des jeweils benachbarten Teleskopabschnittes wirken.

9. Vorrichtung nach Anspruch 8, dadurch gekennzeichnet, daß die Dichtungen an dem dem nächstdickeren Teleskopabschnitt nahen Ende jedes Teleskopabschnitts (10a bis 10d, 12a bis 12d) angeordnet sind und gegen die Innenfläche des nächstdickeren Teleskopabschnittes wirken.

10. Vorrichtung nach mindestens einem der Ansprüche 1 bis 9, dadurch gekennzeichnet, daß an den innerhalb der Teleskopabschnitte liegenden Enden der ausfahrbaren Teleskopabschnitte (10a bis 10d, 12a bis 12d) Ringkolbenabschnitte mit sich quer zur Teleskoprichtung erstreckenden Flächen ausgebildet sind, die von dem unter Druck stehenden Strömungsmittel beaufschlag bar sind.

11. Vorrichtung nach mindestens einem der Ansprüche 1 bis 10, dadurch gekennzeichnet, daß vor den Düsen des Sprühkopfs (20) und im Strömungsweg hinter dem Teleskop (10, 12) ein Druckbegrenzer-Ventil vorgesehen ist.

12. Vorrichtung nach mindestens einem der Ansprüche 1 bis 11, dadurch gekennzeichnet, daß als Sprühmittel Wasser und/oder Entfettungsmittel und/oder Reinigungsmittel und/oder Gleitmittel vorgesehen ist.

13. Vorrichtung nach einem der vorhergehenden Ansprüche, dadurch gekennzeichnet, daß ein Faltenbalg mindestens das bzw. die Teleskope (10, 12) umschließend zwischen einem rahmenfesten Teil und dem Sprühkopf (20) angeordnet ist.

0 279 468

FIG. 1

FIG. 2